# EUROPÄISCHE PATENTSCHRIFT

(11) **EP 0 581 124 B1**
(45) Veröffentlichungstag und Bekanntmachung des Hinweises auf die Patenterteilung: **01.10.1997**
(21) Anmeldenummer: 93111339.3
(22) Anmeldetag: 15.07.1993
(51) Int. Cl.: F16H 61/12, F16H 61/02, B60K 41/22

(54) **Getriebesteuerung mit Notbetriebsfunktion**
Transmission control system with emergency operating mode
Système de commande pour transmission avec mode d'opération de secours

(30) Priorität: 31.07.1992 US 923701
(43) Veröffentlichungstag der Anmeldung: 02.02.1994
(73) Patentinhaber: DEERE & COMPANY, Moline, Illinois 61265 (US)
(72) Erfinder: Falck, Peter Leslie, Waterloo, Iowa 50702 (US); Formwalt, Charles William, Jr., Janesville, Iowa 50647 (US)
(74) Vertreter: Feldmann, Bernhard

(56) Entgegenhaltungen:
- EP-A- 0 309 070
- WO-A-87/06669
- DE-A- 3 836 421
- DE-A- 4 110 206
- '"Part 5 - Transmission System"' 1990 , FORD NEW HOLLAND Chapters 5 and 6: "Limp Home" procedure
- '"8560, 8760 and 8960 Tractors Operation and Tests, Technical Manual"' 31.März 1992 , DEERE & COMPANY Seite 240-50-17: "Come-Home feature"

## Beschreibung

Die Erfindung betrifft eine Steuervorrichtung für Fahrzeuggetriebe, insbesondere eine elektronische Steuerung für ein Lastschalt- oder Automatikgetriebe, das bei Ausfall einer Steuerungskomponente auf eine Notbetriebsfunktion umschaltbar ist, gemäß dem Oberbegriff des Patentanspruchs 1 oder 6.

Bei einem elektrohydraulisch gesteuerten Lastschaltgetriebe ist die korrekte Funktionsweise von verschiedenen Komponenten abhängig. Bei diesen Komponenten handelt es sich beispielsweise um die Bedienungselemente (z. B. Getriebeschalthebel und diesen zugeordnete Teile), die mikrocomputerunterstützte Getriebesteuerung, die elektrohydraulischen Ventile, die Verdrahtung und die Getriebeelemente, wie Kupplungen und Bremsen. Fällt eine dieser Komponenten aus, so verliert die Bedienungsperson den Einfluß auf zumindest einen Teil der normalen Getriebefunktionen. Schlimmstenfalls überträgt das Getriebe kein Drehmoment mehr und das Fahrzeug, beispielsweise der Ackerschlepper, läßt sich nicht mehr fahren. Der Verlust der Schlepperbewegung ist eine Hauptausfallursache. Es ist daher wünschenswert, ein Getriebesystem zu haben, welches eine Notfall- oder Notbetriebsbefähigung aufweist, durch die beim Ausfall einer Komponente eine, wenn auch begrenzte Schlepperbewegung möglich ist, bei der nur solche Komponenten beteiligt sind, die nicht der elektronischen Steuerung unterliegen, wie sie bei einem Nichtautomatikgetriebe vorliegen. Mit anderen Worten, der Schlepper muß sich unter Ausnutzung seiner eigenen Leistung mit irgend einer noch wirksamen Funktion des Getriebes fahren lassen.

Ein bekanntes Getriebe eines serienmäßig hergestellten landwirtschaftlichen Schleppers stellt eine Notbetriebsfunktion (limp-home-funktion) dadurch zur Verfügung, daß Kabelbaumstecker von der Getriebesteuerung gelöst und dann miteinander verbunden werden. Mit diesem bekannten System wird wahrscheinlich ein Kupplungsschalter normalerweise geschlossen, wodurch die Notbetriebsfunktion ermöglicht wird. Darum braucht bei der Ausführung der Notbetriebsfunktion das Kupplungspedal nicht betätigt zu werden. Sowohl das Kupplungspedal als auch der Schalthebel können jedoch verwendet werden, um das Fahrzeug zum Stehen zu bringen. Wenn das Kupplungspedal voll durchgetreten ist, öffnet der Kupplungsschalter und unterbricht die Leistungsabgabe an die Magnetspule eines Getriebesteuerventils, welches sowohl für die Einstellung des ersten Vorwärtsganges als auch für die Einstellung des ersten Rückwärtsganges erforderlich ist. Wenn durch den Schalthebel bei gelöstem Kupplungspedal ein Gang eingerückt wird, oder wenn das Kupplungspedal bei eingerücktem Gang losgelassen wird, tritt ein nichtmodulierter, ruckhafter Eingriff auf. Das Einlegen eines Ganges kann bei diesem System nicht durch die Betätigung der Fahrzeugkupplung moduliert vorgenommen werden. Daher treten Stöße auf, die desto heftiger sind, je höher die Motordrehzahl ist, bei der der Gangeingriff erfolgt.

Ferner sind bei dieser bekannten Notbetriebsfunktion lediglich der erste Vorwärtsgang und der erste Rückwärtsgang verfügbar, so daß mit dem Schlepper die Arbeit nicht fortgesetzt werden kann. Es wäre eine Notbetriebsfunktion wünschenswert, die einen modulierten Gangeingriff erlaubt sowie einen Gang zur Verfügung stellt, der im Arbeitsbereich liegt.

Hält der Schlepper aufgrund eines Fehlers an, so kann bei diesem bekannten System dann ein Gangeingriff auftreten, wenn die Bedienungsperson den Motor laufen und einen Gang in Eingriff läßt, während sie den Steckeraustausch vornimmt. Dieser Gangeingriff kann unmittelbar nach dem Einstecken des Notbetriebssteckers auftreten. Es ist jedoch wünschenswert, eine Notbetriebsfunktion bereitzustellen, bei der ein Sicherheitsschaltkreis aktiv bleibt, durch den ein Starten bei eingerücktem Gang verhindert wird (start-in-gear protection) und außerdem eine durch die Bedienungsperson vornehmbare Modulation des Getriebeabtriebsdrehmomentes möglich ist. Ferner ist es bei dem bekannten System nachteilig, daß wenn bei eingeschaltetem Zündschloß und eingerücktem Notbetriebsgang der Motor mit der Anlasserspule angelassen wird, das Getriebe ein Drehmoment überträgt, sobald der Hydraulikdruck hoch genug ist.

Ein anderes bekanntes Serienlastschaltgetriebe ("Part 5 - Transmission System", 1990, Ford New Holland) weist eine Notbetriebsfunktion der eingangs genannten Art auf. Diese wird eingestellt, indem bestimmte Stecker ausgetauscht und ein Momentschalter betätigt wird, wodurch die Einstellung eines Vorwärts- und eines Rückwärtsgangs möglich wird. Der Notbetriebskreis erfordert es, daß die Bedienungsperson den Momentschalter von Hand in seiner Betriebsstellung hält, um die Fahrzeugbewegung aufrecht zu erhalten. Wird der Schalter losgelassen, so rückt der Getriebegang wieder aus. Die Notbetriebsfunktion ist lediglich für den Fall vorgesehen, daß der Schlepper auf einen Tieflader oder zu einem Reparaturbereich bewegt werden soll, nicht jedoch für eine Fortsetzung der Arbeit des Schleppers. Durch die Notbetriebsfunktion werden alle elektronischen Funktionen, einschließlich des Schaltsegments und eines Merkmals, durch das jede Bewegung verhindert wird (beispielsweise der Sicherheitsschaltkreis, durch den ein Starten bei eingerücktem Gang verhindert wird), als auch die Getriebesteuerung umgangen. Dieses System würde auch dann einen Gangeingriff zulassen, wenn der Notbetriebsschalter ausfällt.

Die der Erfindung zugrunde liegende Aufgabe wird darin gesehen, eine Getriebesteuerung mit einer Notbetriebsfunktion der eingangs genannten Art für die Steuerung eines Lastschalt- oder Automatikgetriebes bereitzustellen, welches einen modulierten Gangeingriff erlaubt. Ferner soll ein Sicherheitsschutz, durch den das spontane Anfahren des Fahrzeugs mit eingerücktem Gang verhindert wird, auch bei dem Notfallbetrieb erhalten bleiben.

Die Aufgabe wird ausgehend von dem jeweiligen Oberbegriff der Patentansprüche 1 bzw. 6 durch deren kennzeichnende Merkmale gelöst. Weitere vorteilhafte Ausgestaltungen und Weiterbildungen der Erfindung gehen aus den Unteransprüchen hervor.

Eine bevorzugte Ausgestaltung der erfindungsgemäßen Steuervorrichtung für ein Fahrzeuglastschaltgetriebe enthält mehrere elektrische Stecker, die in einem normalen Betriebszustand eine elektrische Leistungsübertragung an die mikroprozessorgesteuerten Ventiltreiber der Getriebekupplungssteuerelemente erlauben. Bei Ausfall von Getriebesteuerungskomponenten wird durch Austausch der Steckverbindungen ein Notbetriebszustand realisiert, bei dem eine Leistungsübertragung direkt zu den Getriebekupplungssteuerelementen möglich ist. In beiden Betriebszuständen ist ein Sicherheitsschaltkreis, durch den ein Starten des Fahrzeuges bei eingerücktem Gang verhindert wird, wirksam, der zwei Relais sowie mit dem Schalthebel in Verbindung stehende Schalter aufweist. Im Notbetriebszustand verhindert ein Notbetriebsrelais und ein durch die Fahrzeugkupplung betätigbarer Auskuppelschalter so lange das Einrücken eines Ganges, bis die Bedienungsperson das Kupplungspedal heruntergedrückt und wieder freigegeben hat. Die Fahrzeugkupplung läßt sich auch in diesem Betriebszustand verwenden, um einen Gang moduliert und gesteuert einzurücken.

Ein die Relais enthaltender Schaltkreis ist derart durch die Schalthebelschalter beeinflußbar und mit wenigstens einem der Stecker verbunden, daß er in Abhängigkeit von der Einstellung des Schalthebels und des jeweiligen Betriebszustandes (Normalbetrieb, Notfallbetrieb) eine Leistungsverbindung zwischen einer Spannungsquelle und den Ventiltreibern oder den Steuerventilen herstellt. Der Schaltkreis unterbindet eine Bewegung des Fahrzeugs, sofern der Motor gestartet wurde, während sich der Schalthebel in Nichtneutralstellung befindet und die Stecker für den Notbetrieb zusammengesteckt sind. Andererseits erlaubt der Schaltkreis den Aufbau einer Leistungsverbindung zwischen der Spannungsquelle und den Gerätekupplungssteuerelementen und damit eine durch den Schalthebel vorgebbare Bewegung des Fahrzeugs, nachdem der Schalthebel in seine Neutralsstellung bewegt wurde, sofern zuvor der Motor gestartet wurde, während sich der Schalthebel in Nichtneutralstellung befand und die Stecker für den Notbetrieb zusammengesteckt waren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Blockdiagramm eines mikroprozessorunterstützten Getriebesteuersystems, bei dem die vorliegende Erfindung anwendbar ist,
- Fig. 2: die Schnittdarstellung eines Getriebes, bei dem die vorliegende Erfindung anwendbar ist,
- Fig. 3: einen vergrößerten Ausschnitt des in Fig. 2 dargestellten Getriebes,
- Fig. 4a: die Anordnung der Fig. 4b - 4f und
- Fig. 4b - 4f: einen Steuerschaltkreis gemäß der vorliegenden Erfindung.

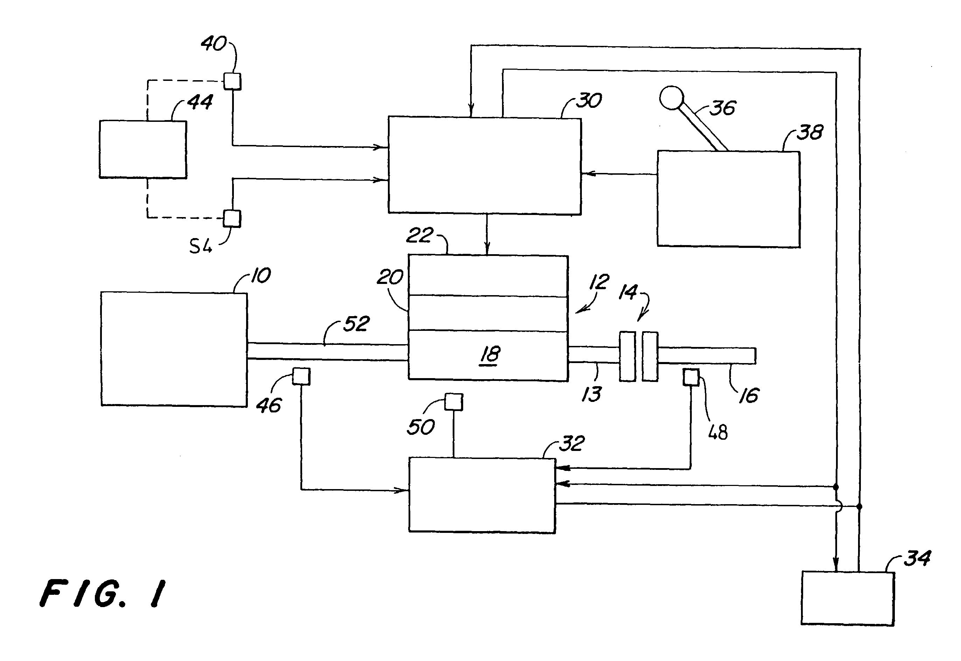

Wie Fig. 1 zeigt, enthält ein Fahrzeugantriebsstrang einen Motor 10, welcher ein Lastschaltgetriebe 12 antreibt, welches seinerseits eine Ausgangswelle 13 aufweist, die über eine konventionelle Trennkupplung (Schleppmomenttrennmechanismus) 14 eine mit den nicht gezeigten Fahrzeugrädern verbundene Ausgangswelle 16 antreibt. Das Lastschaltgetriebe 12 enthält ein Getriebe 18, welches durch einen Satz druckbetätigbarer Steuerelemente oder Kupplungen 20 einstellbar ist, die ihrerseits durch einen zugehörigen Satz von elektromagnetisch betätigbaren Proportionalsteuerventilen 22 ansteuerbar sind. Bei dem Getriebe 18 kann es sich um ein solches handeln, wie es durch die US-A-5,011,465 beschrieben wurde. Bei den Ventilen 22 kann es sich um zweistufige elektrohydraulische Ventile handeln, wie sie in der US-A-4,741,364 beschrieben wurden.

Das Steuersystem des Lastschaltgetriebes 12 enthält eine Getriebesteuereinheit 30, einen Bordcomputer 32 und eine Armaturenbrettanzeige 34. Bei der Getriebesteuereinheit 30 und dem Bordcomputer 32 handelt es sich vorzugsweise um mikroprozessorunterstützte elektronische Steuereinheiten. Eine manuelle Einstellung läßt sich durch einen Getriebeschalthebel 36 vornehmen. Eine Getriebesteuerschalter- und Dekodiereinheit 38 liefert Signale, die der Lage des Getriebeschalthebels 36 entsprechen, an die Getriebesteuereinheit 30. Ein Einkuppelschalter 40 und ein Auskuppelschalter S4 liefern Signale, die der Lage des Kupplungspedals 44 entsprechen. Der Bordcomputer 32 empfängt Signale von einem Motordrehzahlsensor 46. Er empfängt auch Signale von einem Fahrzeuggeschwindigkeitssensor 48 und einem Getriebeöltemperatursensor 50. Der Bordcomputer 32 sendet Informationen von diesen Sensoren an die Getriebesteuereinheit 30 und die Armaturenbrettanzeige 34.

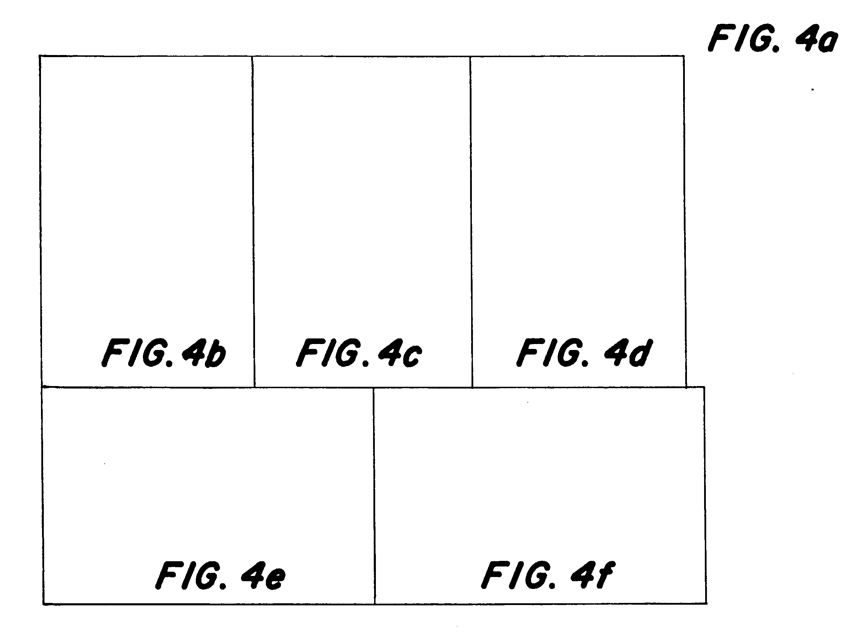

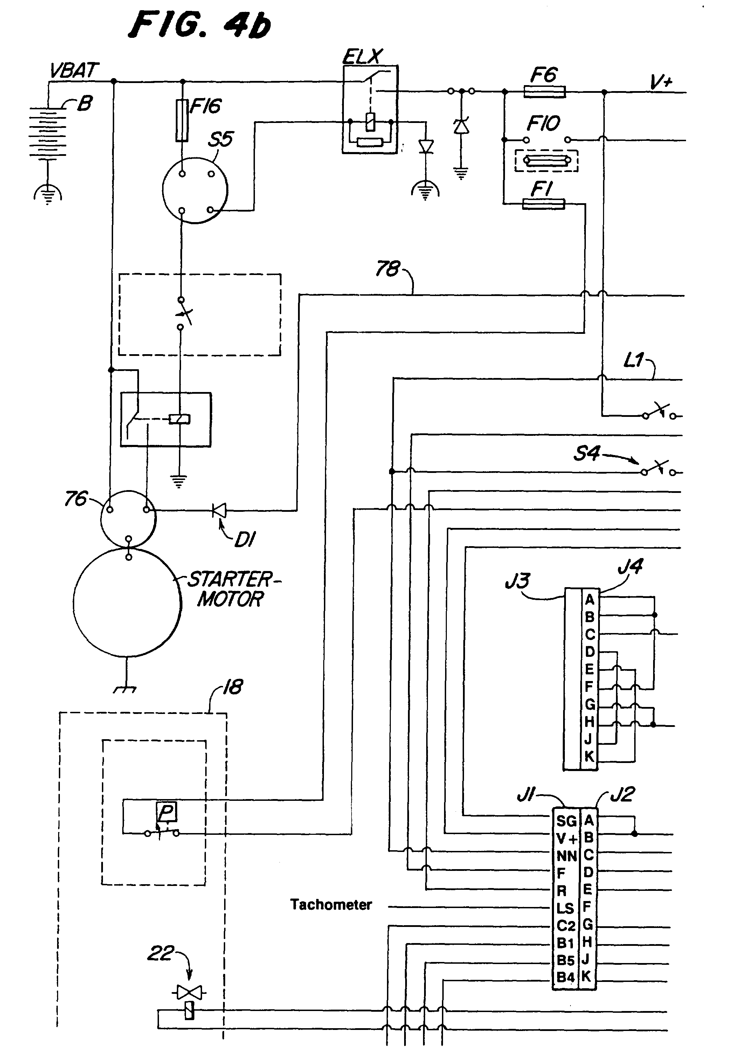

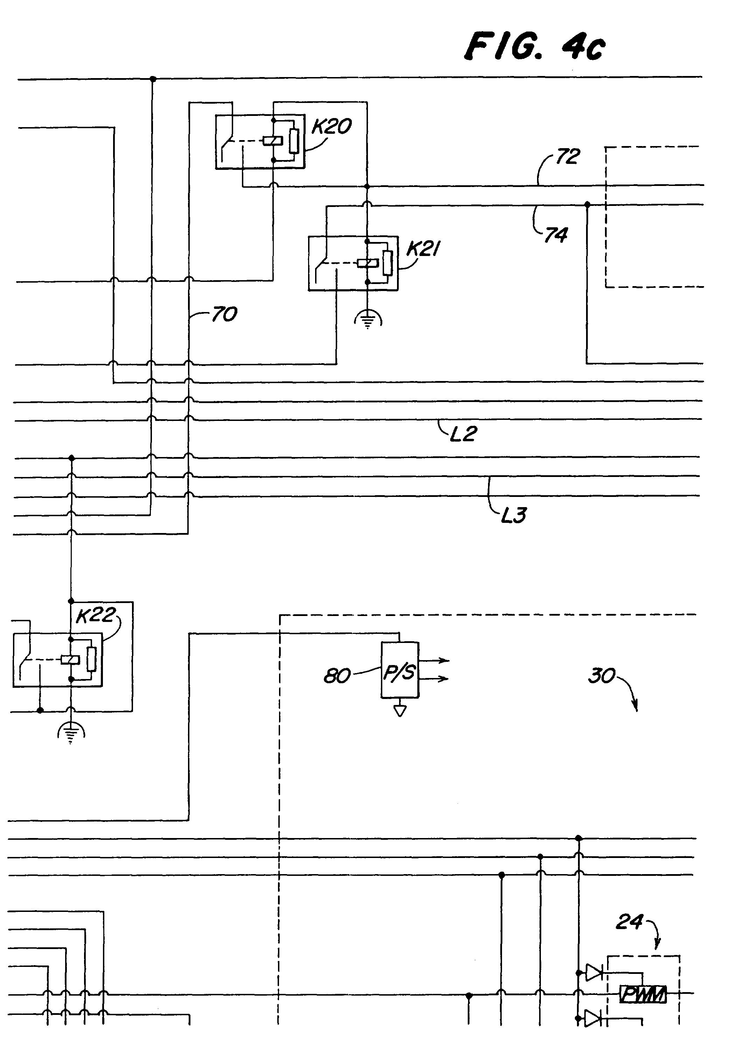

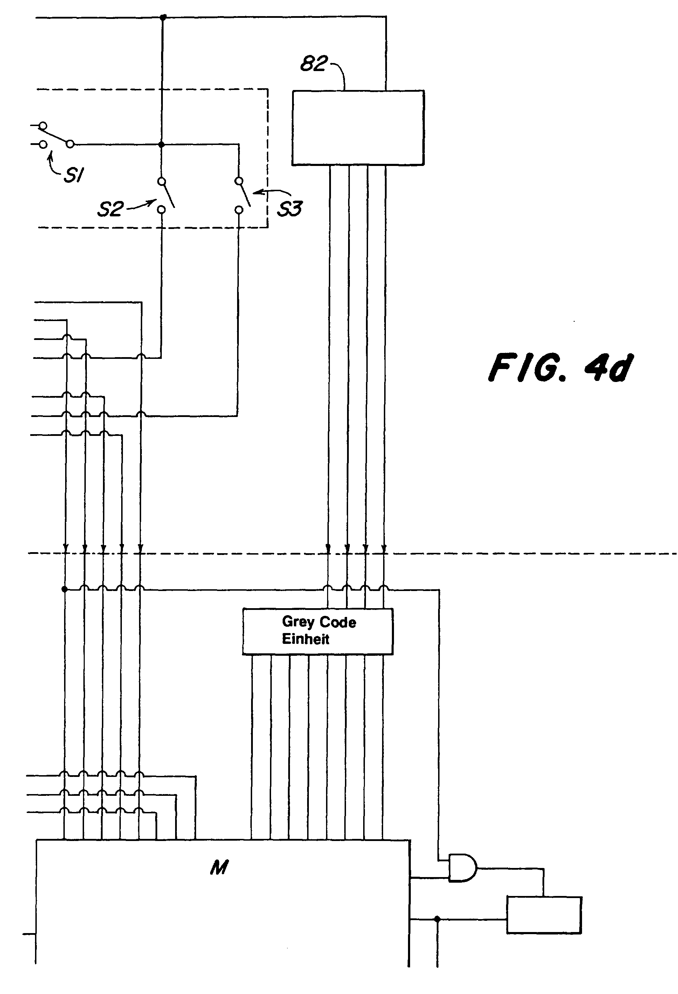

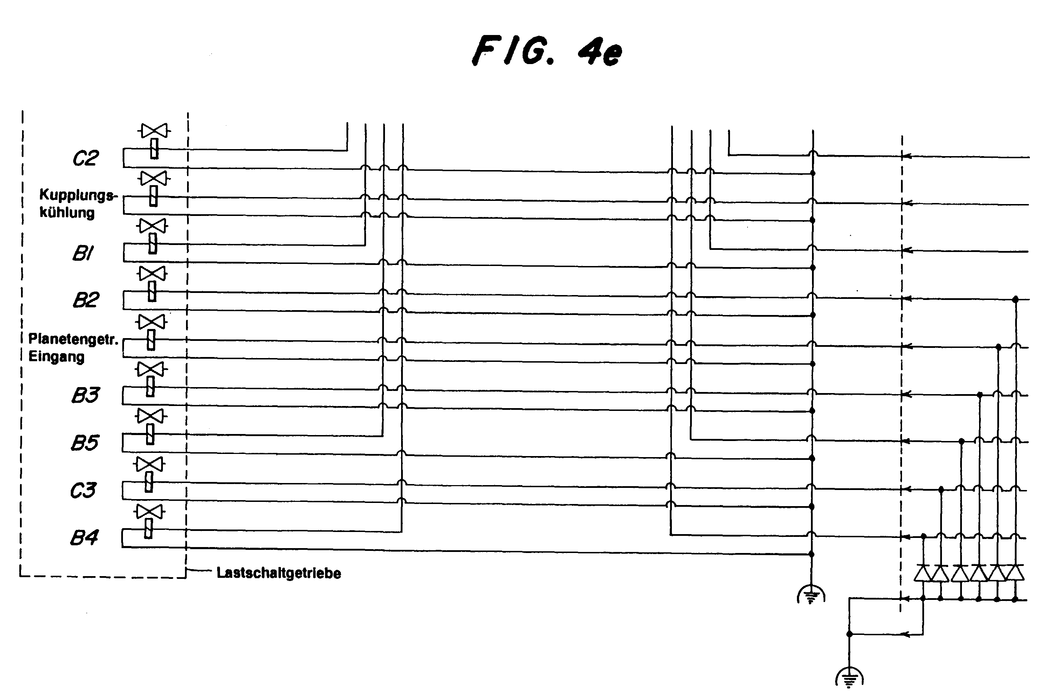

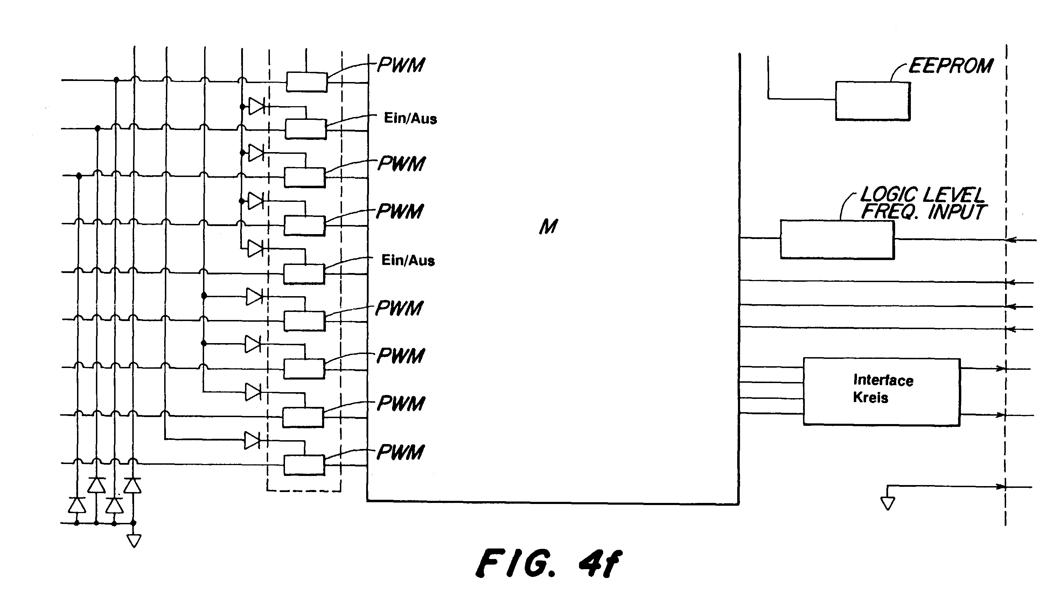

Die Getriebesteuereinheit 30 enthält einen handelsüblichen Mikroprozessor M, welcher Steuersignale an einen Satz von Ventiltreibern 24 liefert, welche ihrerseits an die Ventile 22 pulsweitenmodulierte Spannungssignale mit variablen Pulspausenverhältnissen abgeben. Die Getriebesteuereinheit 30 und die Ventiltreiber 24 erzeugen in Abhängigkeit verschiedener erfaßter und eingestellter Eingangsgrößen Steuersignale, durch die ein gewünschter Druck in den Kupplungen aufgebaut und die Schaltung des Lastschaltgetriebes 12 in gewünschter Weise gesteuert wird. Die vorliegende Erfindung betrifft jedoch nicht die Steuerung der Schaltung des Lastschaltgetriebes 12, sondern eine Behelfsfunktion für den Notbetrieb bei Ausfall von Antriebskomponenten, wie sie anhand der Figuren 4b - 4f beschrieben wird.

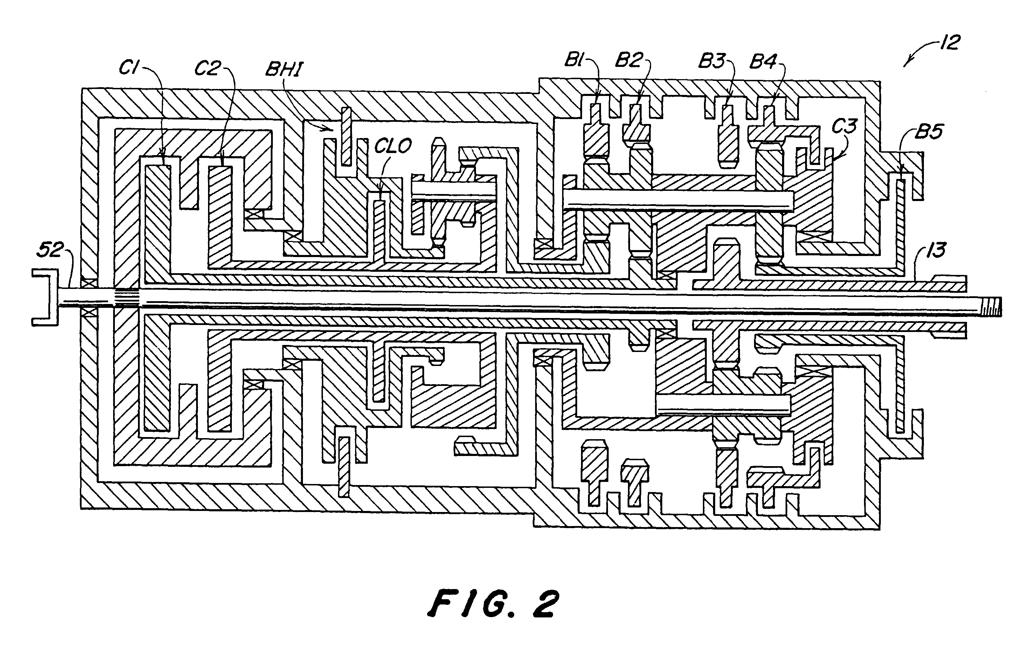

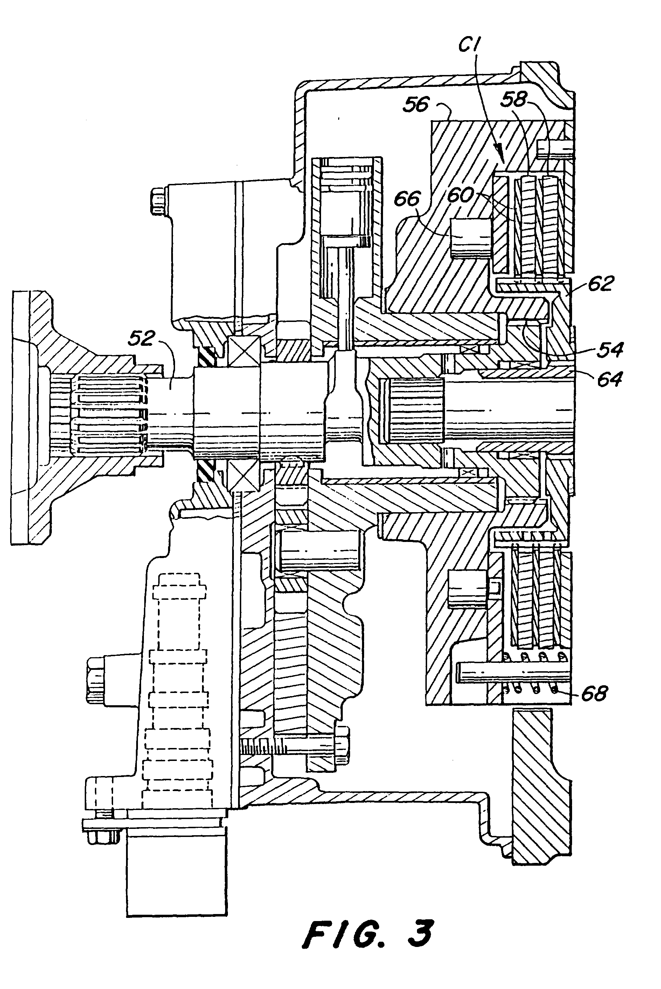

Gemäß der Fig. 2 und 3 enthalten die Steuerelemente des Lastschaltgetriebes 12 einen Satz von Bremselementen B1, B2, B3, B4 und B5 und einen Satz von Kupplungselementen C1, C2, C3 und CL0. Die Eingangswelle 52 ist über eine Keilverzahnung 54 mit der Kupplungstrommel 56 der Kupplungen C1 und C2 (C2 ist in Fig. 3 nicht gezeigt) verbunden. Die Kupplungstrommel 56 ist ihrerseits über Verzahnungen mit den Kupplungstrennscheiben 58 der Kupplung C1 verbunden. Die Kupplungsscheiben 60 der Kupplung C1 sind über Keilverzahnungen mit der Kupplungsnabe 62 der Kupplung C1 verbunden. Die Kupplungsnabe 62 ist mit einer ersten Zwischenwelle 64 verzahnt. Die erste Kupplung C1 enthält zu ihrer Betätigung einen Kolben 66, durch den die Kupplungstrennscheiben 58 und die Kupplungsscheiben 60 zusammenpreßbar sind. Eine Feder 68 spannt die Kupplung C1 in ihre nicht eingerückte Stellung vor. Sowohl der Kupplungskolben 66 als auch die druckbetätigbaren Elemente der anderen Kupplungen und Bremsen werden jede von einer nicht dargestellten Pumpe mit Hydraulikflüssigkeit versorgt. Dabei wird die Druckversorgung in üblicher Weise, die hier nicht näher beschrieben wird, durch die entsprechenden Ventile 22 gesteuert. Weitere Informationen hinsichtlich der Details eines derartigen Getriebes können der US-A-5,011,465 entnommen werden.

Der in den Fig. 4b - 4f dargestellte Schaltkreis stellt einen Vorwärts- und einen Rückwärtsgang zur Verfügung, sofern ein Fehler in einer Komponente auftritt, der zu einem Verlust des normalen Getriebebetriebs führt. Dieser Schaltkreis enthält ein erstes Paar von zusammengehörigen 10-Polsteckern J1, J2, ein zweites Paar von zusammengehörigen 10-Polsteckern J3, J4, ein Notbetriebsrelais K22 und einen Auskuppelschalter S4. Während eines normalen Betriebs sind die beiden Stecker J1 und J2 zusammengesteckt, und der Stecker J4 ist durch den Stecker J3 abgedeckt, der als Staubkappe fungiert.

Bei einem normalen Betrieb wird eine 12 V Spannung von der Batterie B über die Sicherung F6 und die Leitung V+ an den Kontaktstift V+ des Steckers J1 und Kontaktstift B des Stekkers J2 angelegt. Der Kontaktstift B liefert die 12 V Spannung an die Spannungsversorgungseinheit P/S und über den Kontaktstift A des Steckers J2, den Kontaktstift SG des Steckers J1 und die Leitung 70 auch an die Schutzrelais K20 und K21, die vor einem Start mit eingerücktem Gang (start-in-gear: SIG) schützen.

Die Leitung V+ liefert auch die Batteriespannung an die gemeinsamen Anschlüsse des Nichtneutralschalters S1, des Vorwärtsschalters S2 und des Rückwärtsschalters S3. Der Schalter S1 und die Richtungsschalter S2 und S3 stehen mit dem Getriebeschalthebel 36 in Wirkverbindung. Nimmt der Getriebeschalthebel 36 seine Neutralstellung ein, so verbindet Schalter S1 die Batterieleitung V+ mit der Neutralleitung 72. Befindet sich der Getriebeschalthebel 36 nicht in seiner Neutralstellung, so verbindet der Schalter S1 die Batterieleitung V+ mit der Nichtneutralleitung 74. Der Schalter S2 verbindet die Batterie B mit der Vorwärtsleitung L2, sofern sich der Getriebeschalthebel 36 in seiner Vorwärtsgangstellung befindet, und er trennt die Leitung L2 von der Batterieleitung V+, wenn der Getriebeschalthebel 36 nicht in seiner Vorwärtsgangstellung steht. Der Schalter S3 verbindet die Batterieleitung V+ mit der Rückwärtsleitung L3, sofern sich der Getriebeschalthebel 36 in seiner Rückwärtsgangstellung befindet, und er trennt die Leitung L3 von der Batterieleitung V+, wenn der Getriebeschalthebel 36 nicht in seiner Rückwärtsgangstellung steht.

Die Leitung 72 ist mit einer Seite 85 der Spule des SIG-Halterelais K20 verbunden. Das Halterelais K20 hat einen Kontaktstift 30, der mit der Leitung 70, und einen Kontaktstift 87, der mit der Leitung 72 und einer Seite 85 der Spule des SIG-Freigaberelais K21 verbunden ist. Die andere Seite 86 der Spule des SIG-Halterelais K20 ist über die Leitung 78 und die Diode D1 mit der Anlasserspule 76 verbunden. Der Kontaktstift 30 des SIG-Freigaberelais K21 ist mit der Leitung 74, und der Kontaktstift 87 ist mit der Nichtneutralleitung L1 verbunden.

Ein Auskuppelschalter S4 liegt zwischen der Leitung L1 und dem Kontaktstift 87 des Relais K21 einerseits und einer Seite 85 der Spule des Notbetriebsrelais K22 andererseits. Das Relais K22 hat einen Kontaktstift 30, der mit dem Kontaktstift C des Steckers J4 verbunden ist, sowie einen Kontaktstift 87, der mit dem Kontaktstift 85 des Relais K22 sowie den Kontaktstiften G und H des Steckers J4 verbunden ist.

Der Stecker J1 hat einen Kontaktstift SG, der mit der Leitung 70 verbunden ist, einen Kontaktstift V+, der mit der Leitung V+ verbunden ist, einen Kontaktstift NN, der mit der Leitung L1 verbunden ist, einen Kontaktstift F, der mit der Leitung L2 verbunden ist, einen Kontaktstift R, der mit der Leitung L3 verbunden ist, einen Kontaktstift LS, der mit einem nicht dargestellten Tachometer verbunden ist, einen Kontaktstift C2, der mit einem Kupplungssteuerventil C2 verbunden ist, einen Kontaktstift B1, der mit einem Kupplungssteuerventil B1 verbunden ist, einen Kontaktstift B5, der mit einem Kupplungssteuerventil B5 verbunden ist und einen Kontaktstift B4, der mit einem Kupplungssteuerventil B4 verbunden ist.

Der Stecker J2 hat Kontaktstifte A und B, die miteinander und mit der Spannungsversorgungseinheit 80 verbunden sind, Kontaktstifte C, D und E, die mit dem Mikroprozessor M verbunden sind, einen freien Kontaktstift F und Kontaktstifte G, H, J und K, die mit den Treibern 24 der Ventile C2, B1, B5 und B4 verbunden sind.

Der Stecker J3 dient lediglich als Staubkappe für den Stecker J4. Die Kontaktstifte A, B und F, die Kontaktstifte D und J und die Kontaktstifte E und K des Steckers J4 sind jeweils zusammengeschaltet. Der Kontaktstift C des Steckers J4 ist mit dem Kontaktstift 30 des Relais K22, und die Kontaktstifte G und H des Steckers J4 sind gemeinsam mit den Kontaktstiften 87 und 85 des Relais K22 verbunden.

### Betriebsweise

### Normalbetrieb - SIG-Schutz

Wenn mit dem Zündschlüsselschalter S5 die Batteriespannung VBAT auf die Leitung V+ geschaltet wird, während mit dem Getriebeschalthebel 36 ein Gang eingerückt ist, verhindern der Schalter S1 und die SIG-Relais K20 und K21, daß die Batteriespannung an die Nichtneutralleitung L1 angelegt wird, welche der Leistungszufuhr an die Kupplungssteuerventile B1 und C2 des Lastschaltgetriebes 12 dient. Dies geschieht, da bei durch den Getriebeschalthebel 36 eingerücktem Gang der Schalter S1 die Neutralleitung 72 von der Leistungsleitung V+ trennt, so daß die Relais K20 und K21 offen bleiben. Da der Schalter S1 die Neutralleitung 72 trennt, gibt es keine Möglichkeit, die Relais K20 und K21 zu erregen. Wird also der Motor unter dieser Bedingung angelassen, so werden die Steuerventile B1 und C2 nicht erregt, und das Getriebe 18 überträgt kein Drehmoment.

Um einen Gang einzulegen, muß der Getriebeschalthebel 36 zunächst in seine Neutralstellung gebracht werden, so daß der Schalter S1 die Leitung 72 unter Spannung setzt. Hierdurch wird Spannung an die Spule des Relais K20 gelegt, so daß das Relais K20 seine Kontakte schließt und über diese Spannung an die eigene Spule sowie an die Spule des Relais K21 anlegt. Da nun beide Relais K20 und K21 erregt sind und das Relais K20 einen Haltekreis aufrechterhält, kann der Getriebeschalthebel 36 in eine Gangposition bewegt werden, so daß der Schalter S1 die Nichtneutralleitung 74 unter Spannung setzt. Über die geschlossenen Kontakte des Relais K21 fließt Strom von der Leitung V+ über die Nichtneutralleitung 74 zur Leitung L1, den Auskuppelschalter S4 und den Kontaktstift C des Steckers J2, welcher das Signal der Leitung L1 an die Getriebesteuereinheit 30 und damit an sechs der Ventiltreiber 24 weiterleitet. Ist diese Verbindung zu den Ventiltreibern 24 hergestellt, so ist die Getriebesteuereinheit 30 in der Lage, in Übereinstimmung mit der Bewegung des Getriebeschalthebels 36 Gänge einzulegen.

Wenn die Getriebesteuereinheit 30 eine Kombination von Ventiltreibern 24 in Abhängigkeit der Getriebeschalthebelstellung derart ansteuert, daß ein Gang eingerückt ist, wobei der Motor jedoch nicht läuft, so unterbricht der erfindungsgemäße Schaltkreis den Gangeingriff, sobald der Motor 10 angelassen wird, indem die Anschlüsse der Anlasserspule 76 überbrückt werden. Hierdurch trennt der Schutzschaltkreis, der vor einem Start mit eingerücktem Gang schützt (start-in-gear), die Ventiltreiber der Spulen C1, C2, B1 und B2 von der Batterie. Auch die Leistungszufuhr zu der Kupplungskühlung und den Ventiltreibern des Eingangsplanetengetriebes wird unterbrochen, jedoch sind diese für den Gangeingriff nicht erforderlich. Die Leistung zu diesen Ventiltreibern wird unterbrochen, weil der Erdkreis für das Halterelais K20 die Anlasserspule 76 enthält, die einen geringen Widerstand aufweist. Wird die Batteriespannung an den ST-Anschluß der Anlasserspule 76 angelegt, so wird durch die gegensinnig gepolte Seriendiode D1 der Erddurchgang durch die Spule des Relais K20 unterbrochen, und das Relais K20 fällt ab. Die Diode D1 verhindert auch, daß an der Anlasserspule 76 anliegende Spannung die Serienschaltung der Relais K20 und K21 erregt, wenn sich der Getriebeschalthebel 36 in seiner Neutralstellung befindet.

Vorstehend ist die Schutzschaltung für die Bedingung eines eingerückten Ganges beschrieben, die wirksam ist, wenn die Stecker J1, J2, J3 und J4 sich in ihrer normalen Betriebsstellung befinden, wie sie in den Fig. 4b - 4f dargestellt ist. Wie später beschrieben wird, ist diese Schutzschaltung auch dann wirksam, wenn der Stecker J1 mit dem Stecker J4 verbunden ist und die sogenannte Notbetriebsfunktion (limphome function) wirksam ist.

### Notbetriebsfunktion

Um einen Gang einzurücken, müssen bestimmte Magnetventile 22 auf geeignete Weise und in bestimmten Kombinationen erregt werden. Die Leistung für alle Steuerventile 22 des Lastschaltgetriebes 12 fließt durch drei Leitungen. Die Nichtneutralleitung L1 liefert Leistung für sechs Ventile, die Vorwärts leitung L2 liefert Leistung für drei Ventile und die Rückwärtsleitung L3 liefert Leistung für ein Ventil. Durch die Schalter S1, S2 und S3 wird die Leistungsversorgung dieser drei Leitungen L1, L2 und L3 gesteuert. Bei normaler Betriebsart liefern die Leitungen L1, L2 und L3 über die Stecker J1 und J2 Leistung an die elektronischen Ventiltreiber 24.

Wird der Stecker J1 von dem Stecker J2 getrennt (so daß die Notbetriebsfunktion aktiviert wird), liefern diese drei Leitungen L1, L2 und L3 keine Leistung mehr an die Ventiltreiber 24, so daß keines der Ventile 22 eingeschaltet werden kann. Dies ist wichtig, denn wenn die Steuerung einige der Ventile 22 zu der Zeit erregt, zu der die Bedienungsperson versucht, den Notbetriebsgang zu verwenden, so ist das Einrücken eines Ganges des Getriebes 18 geeignet, um die Notbetriebsfunktion funktionsunfähig zu machen. Ferner durchströmt der die Relais K20 und K21 versorgende Strom die Stecker J1 und J2, wodurch ein Gang des Getriebes dann nicht eingerückt wird, wenn der Stecker J1 von dem Stecker J2 gelöst wird, um ihn dann mit dem Stecker J4 zusammenzustecken, während der Motor 10 läuft und der Getriebeschalthebel 36 sich in einer Vorwärts- oder Rückwärtsposition befindet. Dies liegt daran, daß beim Trennen der Stecker J1 und J2 die Leitung 70 stromlos wird und die Leistungsversorgung des Relais K20 zusammenbricht. Befindet sich der Getriebeschalthebel 36 in einer Gangposition, so ist der Schalter S1 in der Nichtneutralstellung. Daher werden die Relais K20 und K21 und mit ihnen auch die Nichtneutralleitung L1 nicht erregt. Hierdurch wird die Leistung von einem Satz der Ventiltreiber 24 abgeschnitten, und durch die Verhinderung einer Betätigung der Kupplungselemente C1, C2, B1 und B2 läßt sich kein Gang einrücken.

Bei der folgenden Diskussion wird davon ausgegangen, daß die Notbetriebsfunktion durch die Trennung des Steckers J1 vom Stecker J2 und durch Verbindung des Steckers J1 mit dem Stecker J4 aktiviert wurde. Vorzugsweise entkoppelt die Bedienungsperson beide Steckerpaare und steckt den Staubkappenstecker J3 auf den Stecker J2, um letzteren zu schützen.

Der Schaltkreis liefert zwei Notbetriebsgänge, sofern der Stecker J1 mit dem Stecker J4 verbunden ist. Der Gang 9F ist der (neunte) Vorwärtsgang und Gang 4R ist der (vierte) Rückwärtsgang. Der ausgewählte Gang ergibt sich daraus, ob der Vorwärtsschalter S2 oder der Rückwärtsschalter S3 geschlossen ist. Um den Gang 9F einzulegen, müssen die Ventile 22 der Steuerkupplungen B1, C2 und B5 des Lastschaltgetriebes 12 erregt werden. Um den Gang 4R einzulegen, müssen die Ventile 22 der Steuerkupplungen B1, C2 und B4 des Lastschaltgetriebes 12 erregt werden. Die beiden Gänge erfordern gemeinschaftlich die beiden Getriebeelemente B1 und C2. Zur Einlegung eines der Gänge müssen alle drei Getriebeelemente eingeschaltet sein, so daß durch das Getriebe 18 Leistung übertragbar ist.

Vorzugsweise wird der Motor 10 angelassen, wenn sich der Getriebeschalthebel 36 in seiner Neutrallage befindet. Dann wird das Relais K20 von dem Schalter S1 über die Leitung 72 erregt, sobald der Schlüsselschalter S5 ausgelöst wird. Die Überbrückung der Kontakte des Relais K20 hält das Relais K20 in seinem erregten Zustand, und auf diese Weise ist auch das Relais K21 erregt. Dies erlaubt über das Relais K21 die Leistungsversorgung bestimmter Magnetventile 22 des Lastschaltgetriebes 12, sofern der Schalter S1 in seine Nichtneutralstellung gebracht wird, indem der Getriebeschalthebel 36 in seine Vorwärts- oder Rückwärtsstellung bewegt wird. Ist der Getriebeschalthebel 36 in seiner Neutralstellung, so ist die Leitung L1 stromlos, und das Relais K22 wird nicht erregt.

Um einen Notbetriebsgang einzurücken, muß die Bedienungsperson zum Einrücken des Ganges 9F den Getriebeschalthebel 36 in eine beliebige Vorwärtsstellung und zum Einrücken des Ganges 4R den Getriebeschalthebel 36 in eine beliebige Rückwärtsstellung bringen. Ferner muß das Kupplungspedal 44 ganz herunter gedrückt und dann wieder frei gegeben werden, um den Eingriff des Notbetriebsganges auszulösen.

Befindet sich der Getriebeganghebel 36 in einer Vorwärtsstellung, so ist der Vorwärtsschalter S2 geschlossen. Hierdurch wird wegen des Schaltdrahtes zwischen den Kontaktstiften D und J des Schalters J4 über die Leitung L2 das Magnetventil des Elements B5 unmittelbar unter Spannung gesetzt. Befindet sich der Getriebeschalthebel 36 in einer Rückwärtsstellung, so schließt der Rückwärtsschalter S3. Hierdurch wird wegen des Schaltdrahtes zwischen den Kontaktstiften E und K des Schalters J4 über die Leitung L3 das Magnetventil des Elements B4 unmittelbar unter Spannung gesetzt. Es wird jedoch kein Gang des Getriebes 18 eingerückt, solange nicht auch das Kupplungspedal 44 voll heruntergetreten wurde. Dies liegt daran, daß bis zum Schließen des Kupplungsausrückschalters S4 das Relais K22 unerregt bleibt, wodurch auch die Magnetventile der Steuerelemente B1 und C2 des Getriebes unerregt bleiben.

Die Bedienungsperson muß jedesmal, wenn sie einen Notbetriebsgang einlegen will, das Kupplungspedal 44 voll herunterdrücken, während sich der Getriebeschalthebel 36 entweder in seiner Vorwärts- oder in seiner Rückwärtsstellung befindet. (Dagegen ist die Betätigung des Kupplungspedals nicht erforderlich, um das Lastschaltgetriebe bei Normalbetrieb zu schalten.) Dies bewirkt, daß die Schalter S1 und S4 zur selben Zeit eingeschaltet sind, was der Fall sein muß, um das Relais K22 zu erregen und in eingeschalteter Stellung zu halten. Ist das Relais K22 erregt, so fließt Strom durch den Schalter S1, die Leitung 74, den geschlossenen Kontakt des Relais K21, die Leitung L1, die Kontaktstifte NN und C der Stecker J1 und J4, den geschlossenen Kontakt des Relais K22 und die Kontaktstifte H und G sowie B1 und C2 der Stecker J4 und J1 zu den Magnetventilen der Elemente B1 und C2. Die nun geschlossenen Kontakte des Relais K22 erhalten eine Spannung über der Spule des Relais K22 aufrecht (Selbsthaltung), so daß das Kupplungspedal 44 losgelassen werden kann (öffnen des Schalters S4), während das Getriebe 18 in einer Schaltstellung bleibt, in der Drehmomente übertragen werden können.

Jedesmal, wenn der Getriebeschalthebel 36 in seine Neutralstellung bewegt wird, wird der Schalter S1 geöffnet, so daß das Relais K22 abfällt. Um wieder in einen Gang zurückzuschalten, muß daher die Bedienungsperson wieder den Getriebeschalthebel 36 verstellen und das Kupplungspedal 44 treten und wieder loslassen, wie im vorstehenden Absatz beschrieben wurde. Die Aufgabe des Relais K22 ist es, sicherzustellen, daß die Bedienungsperson das Fahrzeug unter Kontrolle hat, während in einen Notbetriebsgang umgeschaltet wird.

Um der Bedienungsperson anzuzeigen, daß der Getriebebetrieb abnormal ist, wird ein 12 V (Normal-) Signal an eine Armaturenbrettanzeige 34 immer dann gesendet, wenn der Schlüsselschalter S5 eingeschaltet (Betriebsstellung) und der Stecker J1 mit dem Stecker J4 verbunden ist. Der Strom für dieses Signal wird über die Kontaktstifte B und F des Steckers J4, die durch einen Schaltdraht verbunden sind, von dem Kontaktstift V+ zu dem Kontaktstift LS des Steckers J1 geleitet. Dieses Signal aktiviert ein Gangsymbol auf der Armaturenbrettanzeige 34.

Selbst wenn die Bedienungsperson nicht bemerkt oder vergißt, daß die Notbetriebsfunktion aktiviert wurde, stellt die Betätigung des Kupplungspedals 44 eine zusätzliche Steuerung des Fahrzeuges dar, indem der Eingriff des Notbetriebsgangs beim Lösen des Kupplungspedals 44 moduliert wird. Ohne dieses Merkmal würde das Getriebe unkontrolliert in einen Notbetriebsgang übergehen, sobald der Getriebeschalthebel 36 die Neutralstellung verläßt.

Dieser Notbetriebsschaltkreis ist insbesondere für die Bedienung durch eine Bedienungsperson für den Fall vorgesehen, daß es wichtig ist, die Arbeit mit dem Schlepper fortzusetzen. Die Schalthebelschalter S1, S2 und S3, die Relais K20, K21 und K22 sowie der Auskuppelschalter S4 müssen entsprechend zweckmäßig ausgebildet sein. Diese Komponenten liefern den erforderlichen Schutz gegen unerwartete Bewegungen und erlauben es darüber hinaus der Bedienungsperson, die üblichen Steuermittel zur Einstellung des Getriebes zu verwenden.

Mit dieser Notbetriebsanordnung läßt sich die Feldarbeit selbst dann fortsetzen, wenn der Bordcomputer, die Getriebesteuerung, der Gangkodierer, der Bodengeschwindigkeitssensor, der serielle Datenbus oder der Mikroprozessor M ausfällt. Der Gangkodierer 82 liefert Informationen an die Getriebesteuereinheit 30, um die Stellung des Getriebeschalthebels 36 anzuzeigen. Die Getriebesteuereinheit 30 erlaubt nicht das Einrücken eines Ganges, wenn der Gangdekoder 82 nicht arbeitet. Die Raddrehzahlinformation ist für den normalen Betrieb der Getriebesteuereinheit 30 wichtig. Wenn der Motor 10 läuft, ein Getriebegang eingerückt ist und die nicht dargestellte Kupplung voll eingerückt ist, sollte der Schlepper sich bewegen. Empfängt die Getriebesteuereinheit 30 keine Raddrehzahlinformation, muß sie einen Neutralstellungsbefehl abgeben, da tatsächlich ein Fehler vorhanden sein kann, bei dem unerwartete Bewegungen auftreten. Die erfindungsgemäße Notbetriebsfunktion erlaubt es der Bedienungsperson, mit dem Kupplungspedal 44 das Einrücken in einen Gang zu modulieren, da die nicht dargestellte Kupplung eine nicht dargestellte mechanische Kopplung zu einem nicht dargestellten Hydraulikventil in dem Getriebe 18 enthält. Daher beeinflußt ein elektrischer Fehler des Systems nicht den Betrieb des Kupplungspedals 44.

### Notbetriebsfunktion - SIG-Schutz

Arbeitet der Schlepper normal und hält dann an, weil einer der Kreise für die Steuerventile 22 des Getriebes 18 ausfällt (jedoch nicht der Kreis für ein Steuerventil, das für die Notbetriebsart erforderlich ist), dann läuft der Motor 10 noch weiter, der Getriebeschalthebel 36 befindet sich noch in der Gangstellung und die Bedienungsperson hat möglicherweise vorher das Kupplungspedal 44 herunter gedrückt, so daß das Notbetriebsrelais K22 zu dieser Zeit erregt ist. Tauscht nun die Bedienungsperson die Stecker J1 und J3 gegeneinander aus, um die Notbetriebsfunktion zu ermöglichen, so wird ein Gangeingriff verhindert, da die Stromversorgung zu dem Anschluß 30 des Relais K20 durch die Stecker J1 und J2 geleitet wird. Diese Stromversorgung wird unterbrochen, wenn der Stecker J1 von dem Stecker J2 getrennt wird, da die Kontaktstifte A und B auf der Seite der Getriebesteuereinheit 30 des Steckers J2 miteinander verbunden sind. Werden somit die Notbetriebsstecker ausgetauscht, so werden zunächst die Stecker J1 und J2 voneinander getrennt. Hierdurch fallen die Relais K20 und K21 ab und werden geöffnet. Wird nun der Stecker J1 mit dem Stecker J4 verbunden, um die Notbetriebsfunktion zu ermöglichen, so verhindern die Relais K20 und K21 einen sofortigen Gangeingriff. Der Gangeingriff wird so lange unterbunden, bis der Getriebeschalthebel 36 in seine Neutralstellung zurück gebracht wurde und bis infolge eines vollen Durchtretens des Kupplungspedals 44 das Notbetriebsrelais K22 in Haltestellung übergeht.

Der erfindungsgemäße Schaltkreis verhindert auch einen Gangeingriff, wenn der Motor 10 durch Kurzschließen der Anschlüsse der Starterspule 76 gestartet wird, da der SIG-Schaltkreis die Stromversorgung an die Magnetventile der Elemente B1 und C2 unterbricht, wenn der Motor 10 gestartet wird. Dies liegt daran, daß der Erdkreis des Halterelais K20 die Anlasserspule mit einen niedrigen Widerstandswert enthält, so daß beim Anlegen der Batteriespannung an den ST-Anschluß der Anlasserspule 76 die Seriendiode D1 umgekehrt gepolt ist, so daß durch die Spule des Relais K20 keine Erdschleife mehr gegeben ist und das Relais K20 abfällt. Die Diode D1 verhindert auch, daß eine an der Anlasserspule 76 anstehende Spannung die Serienschaltung der beiden Relais K20 und K21 erregt, wenn der Getriebeschalthebel 36 sich nicht in seiner Neutralstellung befindet. Ist das Relais K20 wegen einer Gangauswahl des Getriebeschalthebels 36 unerregt, so ist der Relaiskontakt offen, und der Nichtneutralschalter S1 ist mit dem Anschluß A des die Schalter S1, S2 und S3 umfassenden Schaltermodulsteckers verbunden. Daher steht keine Spannung mehr an, die das Relais K21 in erregtem Zustand halten könnte. Ist das Relais K21 nicht erregt, so ist die Nichtneutralleitung L1 tot, und es kann keine Spannung an die Ventile B1 und C2 angelegt werden.

## Patentansprüche

1. Steuervorrichtung für ein durch einen Motor (10) angetriebenes Getriebe (12) eines Fahrzeuges mit
- einem durch eine Bedienungsperson betätigbaren Schalthebel (36) zur Erzeugung von Getriebeschaltsignalen, der in eine Neutralstellung und wenigstens in eine Nichtneutralstellung bewegbar ist,
- mehreren durch Hydraulikdruck betätigbaren Steuerelementen (B1, B2, B3, B4, B5, C1, C2, C3, CL0), durch die Gänge des Getriebes (12) einrückbar sind,
- mehreren elektrisch betätigbaren Steuerventilen (22) zur Steuerung der an die Steuerelemente (B1, B2, B3, B4, B5, C1, C2, C3, CL0) abgegebenen Hydraulikdrücke,
- mehreren elektrischen Treiberkreisen (24) zur Steuerung der Einstellung der Steuerventile (22),
- einer elektrischen Spannungsquelle (B) und
- mehreren elektrischen Steckern (J1, J2, J3, J4), die für einen Normalbetrieb derart zusammensteckbar sind, daß elektrische Leistung von der Spannungsquelle (B) an die Treiberkreise (24) leitbar ist, um die Treiberkreise (24) der Steuerventile (22) entsprechend den Vorgaben des Schalthebels (36) anzusteuern, und die für einen Notbetrieb derart zusammensteckbar sind, daß die elektrische Leistung unmittelbar an wenigstens ein Steuerventil (22) für eine begrenzte Funktionsfähigkeit des Getriebes (12) leitbar ist,
gekennzeichnet durch einen Sicherheitsschaltkreis zur Verhinderung eines Starts bei eingerücktem Gang mit
- Schalthebelschaltern (S1, S2, S3), die sich in Abhängigkeit der Lage des Schalthebels (36) öffnen oder schließen lassen und
- einem Relaiskreis, der derart durch die Schalthebelschalter (S1, S2, S3) beeinflußbar und mit wenigstens einem der Stecker (J1, J2, J4) verbunden ist, daß er für den Fall, daß die Stecker (J1, J2, J3, J4) für den Notbetrieb zusammengesteckt sind, und der Motor (10) bei eingerücktem Gang gestartet wird, eine Leistungsverbindung zwischen der Spannungsquelle (B) und wenigstens einem Steuerventil (22) zuläßt, wodurch eine durch den Schalthebel (36) vorgebbare Bewegung des Fahrzeugs ausgelöst wird, wenn der Schalthebel (36) nach dem Anlassen des Motors (10) zunächst in seine Neutralstellung gebracht worden war.

2. Steuervorrichtung nach Anspruch 1, dadurch gekennzeichnet, daß die elektrischen Stecker (J1, J2, J3, J4) elektrische Leistung an den Sicherheitsschaltkreis liefern, sofern die Stecker (J1, J2, J3, J4) für den Normalbetrieb und/oder Notbetrieb zusammengesteckt sind, und daß die Stecker (J1, J2, J3, J4) die Leistungszufuhr zu dem Sicherheitsschaltkreis unterbrechen, wenn die Stecker (J1, J2, J3, J4) voneinander getrennt sind.

3. Steuervorrichtung nach Anspruch 1 oder 2, gekennzeichnet durch
- ein durch eine Bedienungsperson betätigbares Kupplungspedal (44), durch welches die Drehmomentabgabe von dem Getriebe (12) an die Antriebsräder des Fahrzeuges steuerbar ist,
- ein Notbetriebsrelais (K22), das mit einem der Stecker (J4) verbunden ist und
- einen durch das Kupplungspedal (44) betätigbaren Kupplungsschalter (S4), der zwischen der Spannungsquelle (B) und dem Notbetriebsrelais (K22) angeordnet ist, wobei der Kupplungsschalter (S4) und das Notbetriebsrelais (S4) bei für den Notbetrieb zusammengesteckten Steckern (J1, J2, J3, J4) derart zusammenwirken, daß wenigstens ein für den Notbetrieb erforderliches Steuerventil (22) nicht erregt wird, bis das Kupplungspedal (44) heruntergedrückt und gegebenenfalls wieder freigegeben wurde.

4. Steuervorrichtung nach Anspruch 3, gekennzeichnet durch ein Notbetriebsrelais (K22) mit
- einem ersten Kontakt (30), der mit einem ersten Kontaktstift (C) eines der Stecker (J4) verbunden ist,
- einem zweiten Kontakt (87), der mit einem zweiten Kontaktstift (G, H) des Steckers (J4) verbunden ist,
- einer Magnetspule, deren eine Seite (86) geerdet und deren zweite Seite (85) mit dem zweiten Kontakt (87) sowie dem Kupplungsschalter (S4) verbunden ist, und
- einem Schaltstück, durch das der erste Kontakt (30) mit dem zweiten Kontakt (87) verbindbar ist, sofern die Magnetspule erregt wird.

5. Steuervorrichtung nach einem der Ansprüche 1 bis 4, gekennzeichnet durch
- einen mit dem Schalthebel (36) in Verbindung stehenden Neutralschalter (S1), der bei in Neutralstellung stehendem Schalthebel (36) die Spannungsquelle (B) mit einer Neutralleitung (72) und bei nicht in Neutralstellung stehendem Schalthebel (36) die Spannungsquelle (B) mit einer Nichtneutralleitung (74) verbindet,
- ein Freigaberelais (K21) mit einem ersten Kontakt (30), der mit der Nichtneutralleitung (74) verbunden ist, einem zweiten Kontakt (87) zur Verbindung mit wenigstens einem der Steuerventile (22), einer Magnetspule, deren eines Ende (86) geerdet ist, und einem Schaltstück, durch das der erste Kontakt (30) mit dem zweiten Kontakt (87) verbindbar ist, wenn die Magnetspule erregt ist, und
- ein Halterelais (K20) mit einem ersten Kontakt (30), der mit einer Spannungsquelle (B) verbunden ist, einem zweiten Kontakt (87), der mit der anderen Seite (85) der Magnetspule des Freigaberelais (K21) verbunden ist, einer Magnetspule, die zwischen der Neutralleitung (72) und einer Anlasserspule (76) geschaltet ist, und einem Schaltstück, durch das der erste Kontakt (30) mit dem zweiten Kontakt (87) verbindbar ist, wenn die Magnetspule erregt ist.

6. Steuervorrichtung für ein durch einen Motor (10) angetriebenes Getriebe (12) eines Fahrzeuges mit
- einem durch eine Bedienungsperson betätigbaren Kupplungspedal (44), durch welches die Drehmomentabgabe von dem Getriebe (12) an die Antriebsräder des Fahrzeuges steuerbar ist,
- einem durch eine Bedienungsperson betätigbaren Schalthebel (36) zur Erzeugung von Getriebeschaltsignalen, der in eine Neutralstellung und wenigstens in eine Nichtneutralstellung bewegbar ist,
- mehreren durch Hydraulikdruck betätigbaren Steuerelementen (B1, B2, B3, B4, B5, C1, C2, C3, CL0), durch die Gänge des Getriebes (12) einrückbar sind,
- mehreren elektrisch betätigbaren Steuerventilen (22) zur Steuerung der an die Steuerelemente (B1, B2, B3, B4, B5, C1, C2, C3, CL0) abgegebenen Hydraulikdrücke,
- mehreren elektrischen Treiberkreisen (24) zur Steuerung der Einstellung der Steuerventile (22),
- einer elektrischen Spannungsquelle (B) und
- einem durch eine Bedienungsperson ausbildbaren Notbetriebskreis, durch den elektrische Leistung an die Treiberkreise (24) leitbar ist, sofern der Notbetriebskreis sich im Normalbetriebszustand befindet, und durch den die elektrische Leistung unmittelbar an wenigstens ein Steuerventil (22) leitbar ist, wenn der Notbetriebskreis sich in seinem Notbetriebszustand befindet,
gekennzeichnet durch einen Sicherheitsschaltkreis zur Verhinderung eines Starts mit eingerücktem Gang mit
- einem Notbetriebsrelais (K22), das mit dem Notbetriebskreis verbunden ist, und
- einem durch das Kupplungspedal (44) betätigbaren Kupplungsschalter (S4), der zwischen der Span. nungsquelle (B) und dem Notbetriebsrelais (K22) angeschlossen ist, wobei im Falle, daß der Notbetriebskreis sich in dem Notbetriebszustand befindet, der Kupplungsschalter (S4) und das Notbetriebsrelais (K22) derart zusammenwirken, daß wenigstens ein für den Notbetrieb erforderliches Steuerventil (22) so lange nicht erregt wird, bis das Kupplungspedal (44) heruntergedrückt und gegebenenfalls wieder freigegeben wurde.

7. Steuervorrichtung nach Anspruch 6, dadurch gekennzeichnet, daß der Notbetriebskreis elektrische Leistung an den Sicherheitsschaltkreis liefert, sofern sich der Notbetriebskreis in seinem Normalbetriebszustand befindet, und die Versorgung des Sicherheitsschaltkreises mit elektrischer Leistung unterbricht, sofern der Normalbetriebszustand des Notbetriebskreises unterbrochen wird.

## Claims

1. Control device for a gear (12) of a vehicle driven by an engine (10) with
- a switch lever (36) actuable by an operator for generating gear change signals, which switch lever is movable into a neutral position and into at least one non-neutral position,
- a plurality of control elements (B1, B2, B3, B4, B5, C1, C2, C3, CL0) which can be operated by hydraulic pressure by means of which the gears of the gear system (12) may be engaged,
- a plurality of electrically operated control valves (22) for controlling the hydraulic pressures emitted to the control members (B1, B2, B3, B4, B5, C1, C2, C3, CL0),
- a plurality of electrical driver circuits (24) for controlling the setting of the control valves (22),
- an electrical voltage source (B) and
- a plurality of electrical connectors (J1, J2, J3, J4) which may be connected together for normal operation in such a way that electrical power may be conducted from the voltage source (B) to the driver circuits (24) in order to trigger the driver circuits (24) of the control valve (22) in accordance with the commands of the switch lever (36), and which may be connected together for emergency operation in such a way that the electrical power may be conducted directly to at least one control valve (22) for limited operation of the gear system (12),
characterised by a safety switching circuit for preventing starting with a gear engaged, with
- switch lever switches (S1, S2, S3), which can be opened or closed in dependence on the position of the switch lever (36) and
- a relay circuit which may be influenced by the lever switches (S1, S2, S3) in such a way and is connected with at least one of the connectors (J1, J2, J4) that, in the case where the connectors (J1, J2, J3, J4) are interconnected for emergency operation, and the motor (10) is started with a gear engaged, it permits a power connection between the voltage source (B) and at least one control valve, by means of which a movement of the vehicle predetermined by the switch lever (36) is initiated, when the switch lever (36) has firstly been brought into its neutral position after starting of the motor (10).

2. Control device according to claim 1, characterised in that the electrical connectors (J1, J2, J3, J4) deliver electrical power to the safety switching circuit when the connector (J1, J2, J3, J4) are interconnected for normal operation and/or emergency operation, and in that the connectors (J1, J2, J3, J4) interrupt the power supply to the safety switch circuit when the connectors (J1, J2, J3, J4)are separated from one another.

3. Control device according to claim 1 or 2,
characterised by
- a clutch pedal (44) actuable by an operator, and by means of which the torque output from the gear system (12) to the drive wheels of the vehicle may be controlled,
- an emergency operation relay (K22), connected to one of the connectors (J4) and
- a clutch switch (S4), actuable by the clutch pedal (44) and which is located between the voltage source (B) and the emergency operation relay (K22), the clutch switch (S4) and the emergency operation relay (S4), when the connectors (J1, J2, J3, J4) are interconnected for emergency operation, co-operating in such a way that at least one control valve (22) necessary for emergency operation is not energised until the clutch pedal (44) has been depressed and if necessary again released.

4. Control device according to claim 3, characterised by an emergency operation relay (K22) with
- a first contact (3) connected to a first contact pin (C) of one of the connectors (J4),
- a second contact (87) connected to a second contact pin (G, H) of the connector (J4),
- a magnet coil, one side (86) of which is earthed, and the second side (85) of which is connected to the second contact (87) and to the clutch switch (S4), and
- a switch member by means of which the first contact (30) may be connected to the second contact (87) when the magnet coil is energised.

5. Control device according to one of claims 1 to 4, characterised by
- neutral switch (S1) in connection with the switch lever (36), said neutral switch, when the switch lever (36) is in the neutral position, connecting the voltage source (B) with a neutral conductor (72) and, when the switch lever (36)is not in the neutral position, connecting the voltage source (B) to a non-neutral conductor (74),
- a release relay (K21) with a first contact (30) connected to the non-neutral conductor (74), with a second contact (87) for connection with at least one of the control valves (22), with a magnet coil, one end (86) of which is earthed, and a switch member, by means of which the first contact (30) may be connected to the second contact (87) when the magnet coil is energised, and
- a holding relay (K20) with a first contact (30) connected to a voltage source (B) with a second contact (87) connected to the other side (85) of the magnet coil of the release relay K21) with a magnet coil incorporated between the neutral conductor (72) and a starter coil (76), and with a switch member by means of which the first contact (30) may be connected to the second contact (87), when the magnet coil is energised.

6. Control device for a gear system (12) of a vehicle driven by a motor (10), with
- a clutch pedal (44) actuable by an operating person, by means of which the torque emission from the gear system (12) to the drive wheels of the vehicle may be controlled,
- a switch lever (36) actuable by an operator for generating gear switch signals, which is movable into a neutral position and at least into one non-neutral position,
- a plurality of control members (B1, B2, B3, B4, B5, C1, C2, C3, CL0) actuable by hydraulic pressure, by means of which gears of the gear system (12) may be engaged,
- a plurality of electrically actuable control valves (22) for controlling the hydraulic pressures emitted to the control members (B1, B2, B3, B4, B5, C1, C2, C3, CL0),
- a plurality of electrical driver circuits (24) for controlling the setting of the control valves (22),
- an electrical voltage source (B), and
- an emergency operating circuit, controllable by an operator by means of which electrical power may be conducted to the driver circuits (24) when the emergency operation circuit is in the normal operating condition, and by means of which electrical power may be conducted directly to at least one control valve (22) when the emergency operation circuit is in its emergency condition,
characterised by a safety switching circuit for preventing starting with a gear engaged, with
- an emergency operation relay (K22) connected to the emergency operating circuit, and
- a clutch switch (S4) actuable by the clutch pedal (44) and which is connected between the voltage source (B) and the emergency operating relay (K22) whereby, when the emergency operating circuit is in the emergency condition, the clutch switch (S4) and the emergency relay (K22) co-operate in such a way that at least one control valve (22) necessary for emergency operation is not energised until the clutch pedal (44) has been depressed and if necessary released again.

7. Control device according to claim 6, characterised in that the emergency circuit provides electrical power to the safety switch circuit when the emergency circuit is in its normal operating condition, and interrupts the supply of electrical power to the safety switch circuit when the normal operating condition of the emergency circuit is interrupted.

## Revendications

1. Dispositif de commande pour une transmission (12) entraînée par un moteur (10), d'un véhicule comportant
- un levier de changement de vitesse (36) pouvant être actionné par un opérateur et servant à produire des signaux de commutation de la transmission et qui peut être amené dans une position neutre et au moins dans une position non neutre,
- plusieurs éléments de commande (B1,B2,B3,B4, B5,C1,C2,C3,CL0) pouvant être actionnés par une pression hydraulique et au moyen desquels des vitesses de la transmission (12) peuvent être enclenchées,
- plusieurs soupapes de commande (22) pouvant être actionnées électriquement et servant à commander les pression hydrauliques délivrées aux éléments de commande (Bl,B2,B3,B4,B5,C1,C2,C3,CL0),
- plusieurs circuits d'attaque électriques (24) pour commander le réglage des soupapes de commande (22),
- une source de tension électrique (B), et
- plusieurs connecteurs électriques (J1,J2,J3,J4), qui peuvent être interconnectés pour un fonctionnement normal de telle sorte que la puissance électrique de la source de tension (B) peut être appliquée aux circuits d'attaque (24), pour commander les circuits d'attaque (24) des soupapes de commande (22) en fonction des prédéterminations du levier de changement de vitesses (36) et qui peuvent être interconnectées pour un fonctionnement en cas d'urgence de telle sorte que la puissance électrique peut être appliquée directement à au moins une soupape de commande (22) pour une capacité de fonctionnement limité de la transmission (12),
caractérisé par un circuit de sécurité pour empêcher un démarrage lorsqu'une vitesse est enclenchée, comprenant
- des interrupteurs (S1,S2,S3), qui peuvent s'ouvrir ou se fermer en fonction de la position du levier de changement de vitesse (36), et
- un circuit de relais, qui peut être influencé par les interrupteurs (S1,S2,S3) du levier de changement de vitesse et est relié à au moins l'un des connecteurs (J1,J2,J4) de telle sorte que, dans le cas où les connecteurs (J1,J2,J3,J4) sont interconnectés pour le fonctionnement en cas d'urgence et où on fait démarrer le moteur (10) alors qu'une vitesse est enclenchée, ce circuit de relais permet une transmission de puissance entre la source de tension (B) et au moins une soupape de commande (22), ce qui déclenche un déplacement du véhicule, qui peut être prédéterminé par le levier de changement de vitesse (36), lorsque ce dernier a tout d'abord été amené dans sa position neutre après le démarrage du moteur (10).

2. Dispositif de commande selon la revendication 1, caractérisé en ce que les connecteurs électriques (J1,J2,J3,J4) délivrent une puissance électrique au circuit de sécurité dans la mesure où les connecteurs (J1,J2,J3,J4) sont interconnectés pour le fonctionnement normal et/ou le fonctionnement en cas d'urgence, et que les connecteurs (J1,J2,J3,J4) interrompent l'envoi de puissance au circuit de sécurité lorsque les connecteurs (J1,J2,J3,J4) sont séparés les uns des autres.

3. Dispositif de commande selon la revendication 1 ou 2, caractérisé par
- une pédale d'accouplement (44), qui peut être actionnée par un opérateur, qui permet de commander la délivrance d'un couple de la transmission (12) aux roues motrices du véhicule,
- un relais de fonctionnement en cas d'urgence (K22), qui est relié à l'un des connecteurs (J4,) et
- un interrupteur d'embrayage (S4), qui peut être actionné par la pédale d'embrayage (44) et qui est disposé entre la source de tension (B) et le relais de fonctionnement en cas d'urgence (K22), l'interrupteur d'embrayage (S4) et le relais de fonctionnement en cas d'urgence (S4) coopérant lorsque des connecteurs (J1,J2,J3,J4) sont interconnectés pour le fonctionnement en cas d'urgence, de telle sorte qu'au moins une soupape de commande (22) nécessaire pour le fonctionnement d'urgence n'est pas excitée avant que la pédale d'embrayage (44) a été enfoncée et éventuellement à nouveau libérée.

4. Dispositif de commande selon la revendication 3, caractérisé par un relais de fonctionnement en cas d'urgence (K22) comportant
- un premier contact (3), qui est relié à une première broche de contact (C) de l'un des connecteurs (J4),
- un second contact (87), qui est relié à une seconde broche de contact (G,H) du connecteur (J4),
- une bobine magnétique, dont un côté (86) est raccordé à la masse et dont le second côté (85) est relié à un second contact (87) ainsi qu'à l'interrupteur d'embrayage (S4), et
- un élément de commutation, au moyen duquel le premier contact (3) peut être relié au second contact (87), dans la mesure où la bobine magnétique est excitée.

5. Dispositif de commande selon l'une des revendications 1 à 4, caractérisé par
- un interrupteur de neutre (S1), qui est relié au levier de changement de vitesse (36) et qui, lorsque le levier de changement de vitesse (36) est dans la position neutre, relie la source de tension (B) à un conducteur neutre (72) et, dans le cas où le levier de commutation (36) n'est pas situé dans la position neutre, relie la source de tension (B) à un conducteur non neutre (74),
- un relais de libération (K21) comportant un premier contact (30), qui est relié au conducteur non neutre (74), un second contact (87) pour établir la liaison avec au moins l'une des soupapes de commande (22), une soupape magnétique, dont une extrémité (86) est raccordée à la masse, et un élément de commutation, grâce auquel le premier contact (30) peut être relié au second contact (87) lorsque la bobine magnétique est excitée, et
- un relais de maintien (K20) comportant un premier contact (30), qui est relié à une source de tension (B), un second contact (87), qui est relié à l'autre côté (85) de la bobine magnétique du relais de libération (K21), une bobine magnétique, qui est branchée entre le conducteur neutre (72) et une bobine de démarrage (76), et un élément de commutation, grâce auquel le premier contact (30) peut être relié au second contact (87) lorsque la bobine magnétique est excitée.

6. Dispositif de commande pour une transmission (12), entraînée par un moteur (10), d'un véhicule, comportant
- une pédale d'embrayage (44), pouvant être actionnée par un opérateur et de laquelle peut être commandée la délivrance d'un couple depuis la transmission (12) aux roues motrices du véhicule,
- un levier de changement de vitesse (36) pouvant être actionné par un opérateur et servant à produire des signaux de commutation de la transmission et qui peut être amené dans une position neutre et au moins dans une position non neutre,
- plusieurs éléments de commande (B1,B2,B3, B4,B5,C1,C2,C3,CL0) pouvant être actionnés par une pression hydraulique et au moyen desquels des vitesses de la transmission (12) peuvent être enclenchées,
- plusieurs soupapes de commande (22) pouvant être actionnées électriquement et servant à commander les pression hydrauliques délivrées aux éléments de commande (B1,B2,B3,B4,B5,C1,C2,C3,CL0),
- plusieurs circuits d'attaque électriques (24) pour commander le réglage des soupapes de commande (22),
- une source de tension électrique (B), et
- un circuit de fonctionnement en cas d'urgence pouvant être établi par un opérateur et à l'aide duquel une puissance électrique peut être appliquée aux circuits d'attaque (24), dans la mesure où le circuit de fonctionnement d'urgence est situé dans l'état de fonctionnement normal, et au moyen duquel la puissance électrique peut être appliquée directement à au moins une soupape de commande (22), lorsque le circuit de fonctionnement en cas d'urgence est situé dans son état de fonctionnement en cas d'urgence,
caractérisé par un circuit de sécurité servant à empêcher un démarrage alors qu'une vitesse est enclenchée, comportant
- un relais de fonctionnement en cas d'urgence (K22), qui est relié au circuit de fonctionnement en cas d'urgence, et
- un interrupteur d'embrayage (S4), qui peut être actionné par la pédale d'embrayage (44) et qui est branché entre la source de tension (B) et le relais de fonctionnement en cas d'urgence (K22), auquel cas lorsque le circuit de fonctionnement en cas d'urgence est situé dans l'état de fonctionnement en cas d'urgence, l'interrupteur d'embrayage (S4) et le relais de fonctionnement en cas d'urgence (K22) coopèrent de telle sorte qu'au moins une soupape de commande (22) nécessaire pour le fonctionnement en cas d'urgence n'est pas excitée jusqu'à ce que la pédale d'embrayage (44) ait été enfoncée et éventuellement à nouveau libérée.

7. Dispositif de commande selon la revendication 6, caractérisé en ce que le circuit de fonctionnement en cas d'urgence délivre une puissance électrique au circuit de sécurité dans la mesure où le circuit de fonctionnement en cas d'urgence est situé dans son état de fonctionnement normal, et interrompt l'alimentation du circuit de sécurité avec une puissance électrique dans la mesure où l'état de fonctionnement normal du circuit de fonctionnement en cas d'urgence est interrompu.
